(19) Europäisches Patentamt / European Patent Office / Office européen des brevets

(11) **EP 3 128 159 B1**

(12) **EUROPEAN PATENT SPECIFICATION**

(45) Date of publication and mention
of the grant of the patent:
**13.06.2018   Bulletin 2018/24**

(51) Int Cl.:
*F02D 41/00* *(2006.01)*   *F02D 41/04* *(2006.01)*
*F02D 41/14* *(2006.01)*   *F02M 26/06* *(2016.01)*

(21) Application number: **16183039.3**

(22) Date of filing: **05.08.2016**

(54) **METHOD TO CONTROL A LOW-PRESSURE EXHAUST GAS RECIRCULATION EGR CIRCUIT IN AN INTERNAL COMBUSTION ENGINE**

VERFAHREN ZUR STEUERUNG EINER AGR-SCHALTUNG ZUR NIEDERDRUCK-ABGASRÜCKFÜHRUNG IN EINEM VERBRENNUNGSMOTOR

PROCÉDÉ DE RÉGULATION D'UN CIRCUIT EGR DE RECIRCULATION DES GAZ D'ÉCHAPPEMENT RGE BASSE PRESSION DANS UN MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **05.08.2015   IT UB20152868**

(43) Date of publication of application:
**08.02.2017   Bulletin 2017/06**

(73) Proprietor: **Magneti Marelli S.p.A.**
**20011 Corbetta (MI) (IT)**

(72) Inventor: **PANCIROLI, Marco**
**40100 BOLOGNA (IT)**

(74) Representative: **Studio Torta S.p.A.**
**Via Viotti, 9**
**10121 Torino (IT)**

(56) References cited:
EP-A1- 2 211 044       WO-A1-2009/037543
US-A1- 2007 079 614    US-A1- 2013 268 176
US-A1- 2015 101 564

**Description**

<u>TECHNICAL FIELD</u>

The present invention relates to a method to control a low-pressure exhaust gas recirculation EGR circuit in an internal combustion engine.

PRIOR ART

As it is known, (e.g. Patent Literature WO 2009/037543) an internal combustion engine supercharged by means of a turbocharger supercharging system comprises a number of cylinders, each connected to an intake manifold by means of at least one respective intake valve and to an exhaust manifold by means of at least one respective exhaust valve. The intake manifold receives a gas mixture comprising both exhaust gases and fresh air, i.e. air coming from the outside through an intake pipe. The exhaust manifold is connected to an exhaust pipe, which feeds the exhaust gases produced by the combustion to an exhaust system, which releases the gases produced by the combustion into the atmosphere.

The internal combustion engine supercharging system comprises a turbocharger provided with a turbine, which is arranged along the exhaust pipe so as to rotate at a high speed due to the action of the exhaust gases expelled from the cylinders, and a supercharger, which is arranged along the intake pipe and is mechanically connected to the turbine so as to be caused to rotate by the turbine itself in order to increase the pressure of the air present in the feeding pipe.

The internal combustion engine usually also comprises a low-pressure EGR circuit, which comprises, in turn, a bypass pipe, which is provided along the exhaust pipe and is connected in parallel to the turbocharger.

The internal combustion engine is controlled by an electronic control unit, which controls the operation of all the components of the internal combustion engine. The determination of the mass flow rate of the low-pressure exhaust gas recirculation EGR circuit is an extremely important parameter for the engine control strategy implemented by the electronic control unit, as the electronic control unit is configured to determine the spark advance to be operated based on a plurality of parameters comprising the mass flow rate of the low-pressure exhaust gas recirculation EGR circuit.

Therefore, in order to determine the mass flow rate of the low-pressure exhaust gas recirculation EGR circuit, experts have decided to provide, along the bypass pipe, a sensor designed to detect the mass flow rate of the low-pressure exhaust gas recirculation EGR circuit. However, experiments have shown that this solution is affected by the drawback of not being able to ensure good performances both in terms of precision of the mass flow rate detected for the low-pressure exhaust gas recirculation EGR circuit and in terms of reliability in time.

In order to solve this problem, an internal combustion engine was suggested, which is provided with an UEGO linear oxygen sensor, which is arranged along the intake pipe and measures the percentage of oxygen contained in the mixture of air taken in and exhaust gases flowing through the intake pipe.

The incidence of the low-pressure exhaust gas recirculation EGR circuit, which is equal to the ratio between the mass flow rate of the gases recirculated through the low-pressure exhaust gas recirculation EGR circuit and the total mass flow rate taken in, which, in turn, is given by the sum of the mass flow rate of the air taken in and the mass flow rate of the gases recirculated in the low-pressure exhaust gas recirculation EGR circuit, is then determined as a function of the percentage of oxygen contained in the volume of the gas mixture flowing through the intake pipe and detected by means of the UHEGO or UEGO linear oxygen sensor.

In case the air/fuel equivalence ratio of the exhaust gases flowing through the exhaust pipe and recirculated through the low-pressure exhaust gas recirculation EGR circuit ranges from 0 to 1 (in other words, with an air/fuel equivalence ratio rich in fuel), the UEGO linear oxygen sensor is significantly affected by the hydrocarbons present in the exhaust gases, as the UEGO linear oxygen sensor measures both the oxygen and the unburned hydrocarbons, such as HC, CO, $H_2$, present in the gas mixture flowing through the intake pipe. In other words, the quantity of oxygen available in the gas mixture flowing through the intake pipe and determined by means of the UEGO linear oxygen sensor is not reliable and, as a consequence, the estimation of the mass flow rate of the low-pressure exhaust gas recirculation EGR circuit is affected by an unacceptable error.

<u>DESCRIPTION OF THE INVENTION</u>

The object of the present invention is to provide a method to control a low-pressure exhaust gas recirculation EGR circuit of an internal combustion engine, which does not suffer from the drawbacks of the prior art and, at the same time, is easy and cheap to be implemented.

According to the present invention there is provided a method to control a low-pressure exhaust gas recirculation EGR circuit of an internal combustion engine according to the appended claims.

BRIEF DESCRIPTION OF THE DRAWINGS

The present invention will now be described with reference to the accompanying drawings, which show a nonlimiting embodiment thereof, wherein:

-    figure 1 schematically shows a supercharged internal combustion engine provided with a low-pressure exhaust gas recirculation EGR circuit and with an electronic control unit implementing the method according to the present invention;
-    figure 2 shows the development of the air/fuel equivalence ratio as a function of the control current of an UHEGO or UEGO linear oxygen sensor;
-    figure 3 shows the development of the percentage of oxygen as a function of the control current of an UHEGO or UEGO linear oxygen sensor;
-    figure 4 shows the development of the voltage of an ON/OFF oxygen sensor as a function of the air/fuel equivalence ratio;
-    figure 5 is a block diagram showing a first embodiment of the method according to the present invention;
-    figure 6 is a block diagram showing a second embodiment of the method according to the present invention;
-    figure 7 is a block diagram showing a third embodiment of the method according to the present invention; and
-    figure 8 compares different developments of the quantity indicating the incidence of the low-pressure exhaust gas recirculation EGR circuit.

PREFERRED EMBODIMENTS OF THE INVENTION

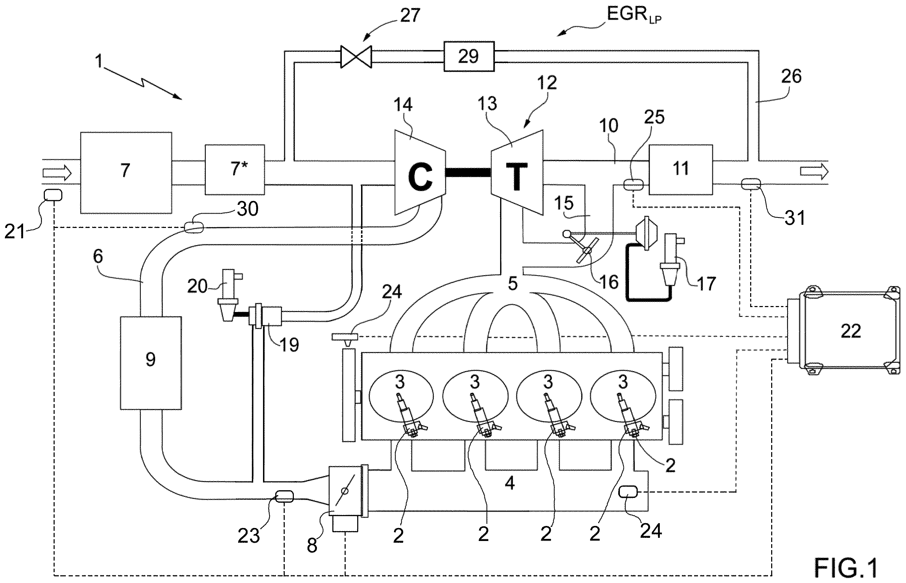

In figure 1, number 1 indicates, as a whole, an internal combustion engine supercharged by means of a turbocharger supercharging system.

The internal combustion engine 1 comprises four injectors 2, which directly inject fuel, preferably gasoline, into four cylinders 3, each connected to an intake manifold 4 by means of at least one respective intake valve (not shown) and to an exhaust manifold 5 by means of at least one respective exhaust valve (not shown).

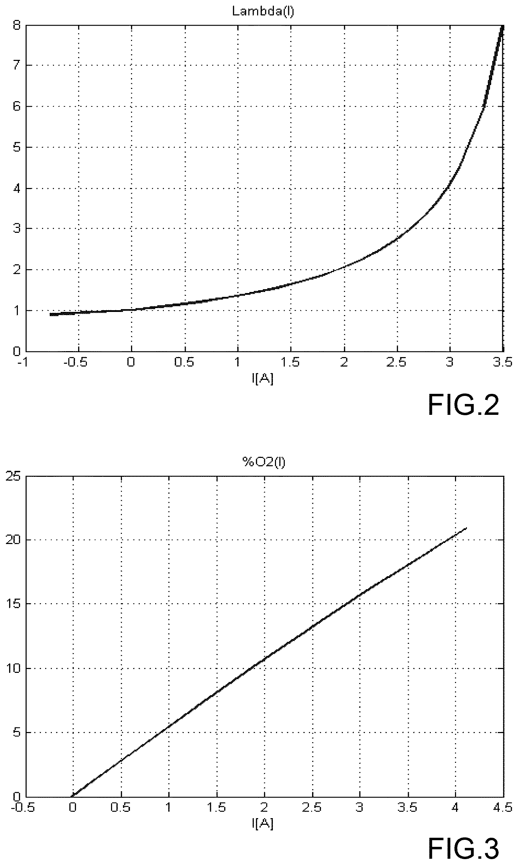

The intake manifold 4 receives a gas mixture comprising both exhaust gases (as described more in detail below) and fresh air, i.e. air coming from the outside through an intake pipe 6, which is provided with an air filter 7 for the fresh air flow and is regulated by a throttle valve 8. Along the intake pipe 6, downstream of the air filter 7, there is also provided an air flow meter 7* (shown in figure 2).

Along the intake pipe 6 (preferably built-in inside the intake manifold 4) there is provided an intercooler 9, which fulfils the function of cooling the air taken in and is preferably built-in in the intake manifold 4, as you can see in figure 2. According to figure 2, the intercooler 9 is connected to a conditioning circuit for the cooling liquid used in the intercooler 9, which comprises a heat exchanger, a feeding pump and a regulation valve, which are arranged along a pipe in parallel to the intercooler 9. The exhaust manifold 5 is connected to an exhaust pipe 10, which feeds the exhaust gases produced by the combustion to an exhaust system, which releases the gases produced by the combustion into the atmosphere and normally comprises at least one catalytic converter 11 and at least one silencer (not shown) arranged downstream of the catalytic converter 11.

The supercharging system of the internal combustion engine 1 comprises a turbocharger 12 provided with a turbine 13, which is arranged along the exhaust pipe 10 so as to rotate at a high speed due to the action of the exhaust gases expelled from the cylinders 3, and a supercharger 14, which is arranged along the intake pipe 6 and is mechanically connected to the turbine 13 so as to be caused to rotate by the turbine 13 itself in order to increase the pressure of the air present in the feeding pipe 6.

Along the exhaust pipe 10 there is provided a bypass pipe 15, which is connected in parallel to the turbine 13 so as to have its ends connected upstream and downstream of the turbine 13 itself; along the bypass pipe 15 there is provided a wastegate valve 16, which is designed to adjust the flow rate of the exhaust gases flowing through the bypass pipe 15 and is controlled by a solenoid valve 17 or by a dedicated motor.

The internal combustion engine further comprises a bypass pipe 18 along the intake pipe 6; the bypass pipe 18 is connected in parallel to the supercharger 14 so as to have its ends connected upstream and downstream of the supercharger 14 itself. Along the bypass pipe there is provided a blowoff valve 19, which is designed to adjust the flow rate of the air flowing through the bypass pipe 18 and is controlled by an electric actuator 20.

The internal combustion engine 1 is controlled by an electronic control unit 22, which controls the operation of all the components of the internal combustion engine 1. The electronic control unit 22 is connected to sensors 21, which measure the temperature and the pressure along the intake pipe 6 upstream of the supercharger 14, to a sensor 23, which measures the temperature and the pressure of the gas mixture present along the intake pipe 6 upstream of the throttle valve 8, to a sensor 24, which measures the temperature and the pressure inside the intake manifold 4, and to a sensor 25 (typically a UHEGO or UEGO linear oxygen sensor - which is known and not described below), which measures the air/fuel ratio of the exhaust gases upstream of the catalytic converter 11 and is capable of determining the concentration of oxygen in the exhaust gases in a continuous manner within a wide range of values.

Finally, the internal combustion engine 1 comprises a low pressure circuit $EGR_{LP}$, which comprises, in turn, a bypass pipe 26 originating from the exhaust pipe 10, preferably downstream of the catalytic converter 11, and leading into the intake pipe 6, downstream of the air flow meter 7; the bypass pipe 26 is connected in parallel to the turbocharger 12. Along the bypass pipe 26 there is provided an EGR valve 27, which is designed to adjust the flow rate of the exhaust gases flowing through the bypass pipe 26. Along the bypass pipe 26, upstream of the valve 27, there is also provided a heat exchanger 29, which fulfils the function of cooling the gases flowing out of the exhaust manifold 5 and into the supercharger 14.

The electronic control unit 22 is connected to a sensor 30 (typically a UHEGO or UEGO linear oxygen sensor - which is known and not described below), which is arranged along the intake pipe 6 upstream of both the intercooler 9 and the throttle valve 8 and measures the percentage of oxygen in volume in the mixture of air taken in and exhaust gases.

According to a preferred variant, the sensor 30 determining the quantity of oxygen available in the gas mixture flowing through the intake pipe 6 is equal to the sensor 25 detecting the air/fuel ratio of the exhaust gases downstream of the catalytic converter 11.

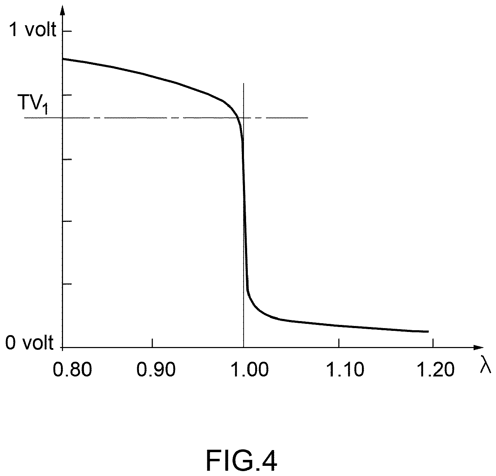

Finally, the electronic control unit 22 is connected to a sensor 31 (typically a UHEGO or UEGO linear oxygen sensor - which is known and not described below), which is arranged along the exhaust pipe 10 downstream of the catalytic converter 11 and measures the air/fuel equivalence ratio of the exhaust gases. The signal of the sensor 31 has a development, shown in figure 4, wherein the voltage of the sensor 31 oscillates between two discrete values and the passage from one value to the other occurs in a very narrow time interval, in order to then remain constant.

The total mass flow rate $M_{TOT}$ of the gas mixture flowing through the intake pipe 6 satisfies the following equation:

$$M_{TOT} = M_{EGR\_LP} + M_{AIR}$$

$$M_{EGR\_LP} = M_{TOT} - M_{AIR} \quad [1]$$

$M_{TOT}$ mass of the gas mixture flowing through the intake pipe 6;
$M_{AIR}$ mass of fresh air coming from the outside that flows through the intake pipe 6; and
$M_{EGR\_LP}$ mass of exhaust gases recirculated through the low-pressure circuit $EGR_{LP}$, which flows through the intake pipe.

We define as follows the quantity (or ratio) $R_{EGR}$, which indicates the incidence of the low-pressure circuit $EGR_{LP}$ on the gas mixture flowing through the intake pipe 6:

$$R_{EGR} = M_{EGR\_LP}/M_{TOT} \quad [2]$$

$M_{TOT}$ mass of the gas mixture flowing through the intake pipe 6; and
$M_{EGR\_LP}$ mass of exhaust gases recirculated through the low-pressure circuit $EGR_{LP}$, which flows through the intake pipe.

Inserting the equation [1] in the equation [2], you obtain that:

$$R_{EGR} = (M_{TOT} - M_{AIR}) /M_{TOT} =$$

$$= 1 - (M_{AIR} /M_{TOT} ) \quad [3]$$

$M_{TOT}$ mass of the gas mixture flowing through the intake pipe 6; and
$M_{AIR}$ mass of fresh air coming from the outside that flows through the intake pipe 6.

If we take into account the fact that the mass of fresh air coming from the outside that flows through the intake pipe 6 contains 21% of oxygen, the following equation applies:

$$M_{AIR} * 21 = M_{TOT} * O_{2\_M}$$

$$M_{AIR} / M_{TOT} = O_{2\_M} / 21 \quad [4]$$

$M_{TOT}$ mass of the gas mixture flowing through the intake pipe 6;

$M_{AIR}$ mass of fresh air coming from the outside that flows through the intake pipe 6; and

$O_{2\_M}$ percentage of oxygen contained in the mass of the gas mixture flowing through the intake pipe 6, which is detected by means of the sensor 30.

Inserting the equation [4] in the equation [3], you can obtain that:

$$R_{EGR} = 1 - (O_{2\_M} / 21) \quad [5]$$

$O_{2\_M}$ percentage of oxygen contained in the mass of the gas mixture flowing through the intake pipe 6, which is detected by means of the sensor 30.

The equation [5] can be simplified considering the fact that the volume of fresh air coming from the outside that flows through the intake pipe 6 contains 21% of oxygen. The resulting formula is the following:

$$R_{EGR} = 1 - (O_2 / 21) \quad [6]$$

$O_2$ percentage of oxygen contained in the volume of the gas mixture flowing through the intake pipe 6, which is detected by means of the sensor 30.

According to a preferred variant, the air flow meter 7* is designed to detect a series of quantities, such as: the mass $M_{AIR}$ of fresh air coming from the outside that flows through the intake pipe 6, the temperature $T_{AIR\_IN}$ of the mass $M_{AIR}$ of fresh air coming from the outside that flows through the intake pipe 6 and the psychometric level $PSI_{AIR\_IN}$ of the mass $M_{AIR}$ of fresh air coming from the outside that flows through the intake pipe 6.

Therefore, one can improve the estimate of the quantity (or ratio) $R_{EGR}$ indicating the incidence of the low-pressure circuit $EGR_{LP}$ on the mass of the gas mixture flowing through the intake pipe 6 and make the formula [6] more precise as well as introduce the percentage mass flow rate $\%R_{EGR}$ of the low-pressure exhaust gas recirculation EGR circuit $EGR_{LP}$ in the gas mixture flowing through the intake pipe 6 by means of the following formulas:

$$R_{EGR} = 1 - (O_2/O_{2\_REF}) \quad [7]$$

$$\%R_{EGR} = [1 - (O_2/O_{2\_REF})] *100 \quad [8]$$

$$O_{2\_REF} = f(PSI_{AIR\_IN}, T_{AIR\_IN}) \quad [9]$$

$\%R_{EGR}$ percentage mass flow rate of the low-pressure exhaust gas recirculation circuit $EGR_{LP}$ in the gas mixture flowing through the intake pipe 6;

$O_2$ percentage of oxygen contained in the volume of the gas mixture flowing through the intake pipe 6, which is detected by means of the sensor 30;

$O_{2\_REF}$ percentage of oxygen contained in the volume of fresh air coming from the outside that flows through the intake pipe 6;

$PSI_{AIR\_IN}$ psychometric level of the mass $M_{AIR}$ of fresh air coming from the outside that flows through the intake pipe 6, which is provided by the air flow meter 7*; and

$T_{AIR\_IN}$ temperature of the mass $M_{AIR}$ of fresh air coming from the outside that flows through the intake pipe 6, which is provided by the air flow meter 7*.

Since the electronic control unit 22 is designed to determine the spark advance ensuring an optimal combustion for each engine point based on the flow rate of the exhaust gases of the low-pressure circuit $EGR_{LP}$, it is necessary to provide a reliable and sturdy sensor 30, which delivers an estimate of the quantity of oxygen present in the gas mixture flowing through the intake pipe 6 that is as accurate as possible.

Therefore, the measurement of the percentage $O_2$ of oxygen contained in the volume of the gas mixture flowing through the intake pipe 6 can be improved by means of the following formula:

$$O_2 * k = O_{2\_COMP} \quad [10]$$

$O_2$ percentage of oxygen contained in the volume of the gas mixture flowing through the intake pipe 6, which is detected by means of the sensor 30;
k compensation factor; and
$O_{2\_COMP}$ percentage of oxygen contained in the volume of the gas mixture flowing through the intake pipe 6.

Starting from the equation [10] and replacing in the equations [6] and [7], you obtain that the quantity $R_{EGR}$ can be expressed as follows:

$$R_{EGR} = 1 - (O_{2\_COMP} / O_{2\_REF}) \quad [11]$$

$$R_{EGR} = 1 - (O_2 * k / O_{2\_REF}) \quad [12]$$

$O_2$ percentage of oxygen contained in the volume of the gas mixture flowing through the intake pipe 6, which is detected by means of the sensor 30;
k compensation factor; and
$O_{2\_REF}$ percentage of oxygen contained in the volume of fresh air coming from the outside that flows through the intake pipe 6.

Clearly, once the quantity $R_{EGR}$ and/or the percentage mass flow rate $\%R_{EGR}$ of the low-pressure exhaust gas recirculation circuit $EGR_{LP}$ in the gas mixture flowing through the intake pipe 6 are known and knowing the mass flow rate $M_{TOT}$ of the gas mixture flowing through the intake pipe 6, through the equation [2] one can obtain the mass flow rate $M_{EGR\_LP}$ of exhaust gases recirculated through the low-pressure circuit $EGR_{LP}$, which flows through the intake pipe 6.

Below you can find a description of the way in which the electronic control unit 22 determines the quantity $R_{EGR}$.

The control current of the sensor 30 is correlated with the oxygen present in the exhaust gases with a lean air/fuel equivalence ratio (hence, with $O_2$, $CO_2$, $H_2O$, $N_2$...) and correlated with the unburned hydrocarbons (HC, CO, $H_2$...) with a rich air/fuel equivalence ratio. Therefore, the control current of the sensor 30 is correlated with the oxygen, but also with the unburned hydrocarbons (HC, CO, $H_2$...) recirculated by the low-pressure exhaust gas recirculation circuit $EGR_{LP}$ with a rich air/fuel equivalence ratio. Since the sensors 25 and 30 are of the same type, it is possible to compensate the control current of the sensor 30 with the control current of the sensor 25, in order to compensate the measure of the oxygen taken in by adding the part due to the unburned hydrocarbons (HC, CO, $H_2$...) recirculated by the low-pressure exhaust gas recirculation circuit $EGR_{LP}$ weighed for the quantity $R_{EGR}$. This compensation is carried out net of all the corrections in the respective intake and exhaust environments: due to pressure, adaptivity of the sensor (due to pressure), compensation resistance, etc. Ideally, one can define a percentage of virtual oxygen associated with the unburned hydrocarbons (HC, CO, $H_2$...) recirculated by the low-pressure exhaust gas recirculation circuit $EGR_{LP}$, which is to be added to the oxygen measured by the sensor 30, so as to correctly estimate the percentage of oxygen present in the mixture of fresh air taken in and exhaust gases.

Knowing the characteristics of the sensor 25, it is possible to determine both the percentage $O_2$ of oxygen contained in the volume of the exhaust gases flowing through the exhaust pipe 10 and the air/fuel equivalence ratio $\lambda$ of the exhaust gases flowing through the exhaust pipe 10 by means of the intensity of the control current I of the sensor 25.

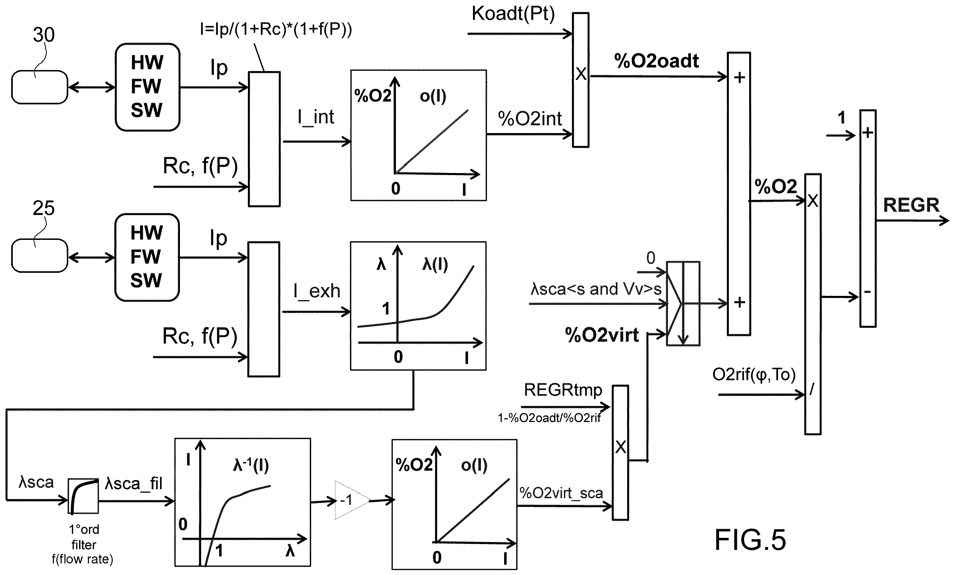

According to a preferred variant shown in figure 5, through the model of the sensor 25 one can obtain the control current $I_P$ of an amperometric cell of the sensor 25. Subsequently, the intensity of the control current I of the sensor 25 is determined as a function of the control current $I_P$ of the amperometric cell of the sensor 25, of a compensation resistance $R_C$ of the sensor 25 and of the pressure P.

In particular, the intensity of the control current I of the sensor 25 is determined by means of the following formula:

$$I = I_P / (1 + R_C) * (1 + f(P)) \quad [13]$$

I control current of the sensor 25;
$I_P$ control current of an amperometric cell of the sensor 25;

$R_C$ compensation resistance of the sensor 25; and

f(P) function of the pressure P.

The function f(P) is a function that is provided by the manufacturer of the sensor 25 and allows users to take into account the influence exerted by the pressure P upon the sensor 25 inside the exhaust pipe 10.

Once the control current I of the sensor 25 has been determined, through the characteristic curves of the sensor 25 shown in figures 2 and 3 and provided by the manufacturer of the sensor 25 (which are stored in the electronic control unit 22) one can determine the percentage $O_2$ of oxygen contained in the volume of the exhaust gases flowing through the exhaust pipe 10 and the air/fuel equivalence ratio $\lambda$ of the exhaust gases flowing through the exhaust pipe 10 by means of the intensity of the control current I of the sensor 25. The characteristic shown in figure 2 indicates the value of the air/fuel equivalence ratio $\lambda$ of the exhaust gases flowing through the exhaust pipe 10 as a function of the control current I of the sensor 25; it should be pointed out that the control current I of the sensor 25 assumes negative values in case the air/fuel equivalence ratio $\lambda$ of the exhaust gases flowing through the exhaust pipe 10 ranges from 0 to 1, i.e. with a rich air/fuel equivalence ratio, whereas the control current I of the sensor 25 assumes positive values in case the air/fuel equivalence ratio $\lambda$ of the exhaust gases flowing through the exhaust pipe 10 is greater than 1, i.e. with a lean air/fuel equivalence ratio.

On the other hand, the characteristic shown in figure 3 indicates the percentage $O_2$ of oxygen contained in the volume of the exhaust gases flowing through the exhaust pipe 10 as a function of the control current I of the sensor 25; it should be pointed out that the percentage $O_2$ of oxygen contained in the volume of the exhaust gases flowing through the exhaust pipe 10 has a substantially linear development as a function of the control current I of the sensor 25. Clearly, in the characteristic shown in figure 3, the percentage of oxygen $O_2$ contained in the volume of the exhaust gases only has positive values, as the negative values of the percentage of oxygen $O_2$ contained in the volume of the exhaust gases have no physical meaning.

However, it is possible to ideally go on with the development of the characteristic shown in figure 3, so that the control current I of the sensor 25 assumes negative values in case the percentage of oxygen $O_2$ contained in the volume of the exhaust gases is smaller than zero, whereas the control current I of the sensor 25 assumes positive values in case the percentage of oxygen $O_2$ contained in the volume of the exhaust gases is greater than zero.

According to figure 5, the method comprises the step of determining the air/fuel equivalence ratio $\lambda_{EX}$ of the exhaust gases flowing through the exhaust pipe 10 by means of the intensity of the control current I of the sensor 25 through the characteristic curve shown in figure 2.

The air/fuel equivalence ratio $\lambda$ of the exhaust gases flowing through the exhaust pipe 10 is then filtered by means of a first order filter. The constant of said first order filter is determined as a function of the total mass flow rate taken in, which is equal to the sum of the mass flow rate $M_{AIR}$ of fresh air coming from the outside that flows through the intake pipe 6 and of the mass flow rate of exhaust gases recirculated through the low-pressure exhaust gas recirculation circuit $EGR_{LP}$ (which thus allows you to take into account the mixing and the transportation dynamic in the exhaust pipe 10).

The filtered value of the air/fuel equivalence ratio $\lambda_F$ of the exhaust gases flowing through the exhaust pipe 10 is used to determined the control current $I_F$ of the sensor 25 through figure 2. In other words, the characteristic shown in figure 2 indicates the control current $I_F$ of the sensor 25 as a function of the filtered value of the air/fuel equivalence ratio $\lambda_F$ of the exhaust gases flowing through the exhaust pipe 10. As already mentioned above, the control current $I_F$ of the sensor 25 assumes negative values in case the air/fuel equivalence ratio $\lambda_F$ of the exhaust gases flowing through the exhaust pipe 10 ranges from 0 to 1, namely with a rich air/fuel equivalence ratio.

Hence, with a rich air/fuel equivalence ratio, you obtain a negative value of the control current $I_F$ of the sensor 25. Subsequently, the strategy comprises using the absolute value of the control current $I_F$ of the sensor 25 to determine a percentage $O_{2VIRT}$ of virtual oxygen, which corresponds to part of the unburned hydrocarbons HC, CO, $CO_2$ contained in the volume of the exhaust gases flowing through the exhaust pipe 10 and recirculated through the low-pressure circuit $EGR_{LP}$. In particular, the method comprises determining, at first, a percentage $O_{2V\_EX}$ of total virtual oxygen, which corresponds to part of the unburned hydrocarbons HC, CO, $CO_2$ contained in the volume of the exhaust gases flowing through the exhaust pipe 10 by means of the absolute value of the control current $I_F$ of the sensor 25 through the characteristic curve shown in figure 3.

In order to determine the percentage $O_{2VIRT}$ of virtual oxygen, which corresponds to part of the unburned hydrocarbons HC, CO, $CO_2$ contained in the volume of the exhaust gases flowing through the exhaust pipe 10 and recirculated through the low-pressure circuit $EGR_{LP}$, it is necessary to use the following formula:

$$O_{2VIRT} = O_{2V\_EX} * R_{EGRtemp} \qquad [14]$$

$O_{2VIRT}$ percentage of virtual oxygen contained in the volume of the exhaust gases flowing through the exhaust pipe 10 and recirculated through the low-pressure circuit $EGR_{LP}$;

$O_{2V\_EX}$ percentage of total virtual oxygen, which corresponds to part of the unburned hydrocarbons HC, CO, $CO_2$ contained in the volume of the exhaust gases flowing through the exhaust pipe 10; and

$R_{EGRtemp}$ temporary value of the quantity indicating the incidence of the low-pressure circuit $EGR_{LP}$ on the gas mixture flowing through the intake pipe 6.

According to a first variant, the temporary value $R_{EGRtemp}$ of the quantity indicating the incidence of the low-pressure circuit $EGR_{LP}$ on the gas mixture flowing through the intake pipe 6 is calculated by means of the formula [11] (without applying any correction to the percentage of virtual oxygen contained in the volume of the exhaust gases). According to a further variant, the temporary value $R_{EGRtemp}$ of the quantity indicating the incidence of the low-pressure circuit $EGR_{LP}$ on the gas mixture flowing through the intake pipe 6 is equal to the quantity (or ratio) $R_{EGR}$ determined during the previous operating cycle of the strategy.

Subsequently, the strategy comprises determining the percentage $O_{2INT}$ of oxygen available in the gas mixture flowing through the intake pipe 6 knowing the characteristics of the sensor 30. According to a preferred variant, through the model of the sensor 30 one can obtain the control current $I_P$ of an amperometric cell of the sensor 30. Subsequently, the intensity of the control current I of the sensor 30 is determined as a function of the control current $I_P$ of the amperometric cell of the sensor 30, of a compensation resistance $R_C$ of the sensor 30 and of the pressure P.

In particular, the intensity of the control current I of the sensor 30 is determined by means of the formula [13], wherein the function f(P) is a function that is provided by the manufacturer of the sensor 30 and allows users to take into account the influence exerted by the pressure P upon the sensor 30 inside the intake pipe 6.

Once the control current I of the sensor 30 has been determined, through the characteristic curve of the sensor 30 provided by the manufacturer of the sensor 30 (which is stored in the electronic control unit 22) one can determine the percentage $O_2$ of oxygen contained in the gas mixture flowing through the intake pipe 6. The characteristic (which is substantially equal to the one considered for the sensor 25 and shown in figure 3) indicates the percentage $O_2$ of oxygen contained in gas mixture flowing through the intake pipe 6 as a function of the control current I of the sensor 30; it should be pointed out that, even in this case, the percentage $O_2$ of oxygen contained in the gas mixture flowing through the intake pipe 6 has a substantially linear development as a function of the control current I of the sensor 30.

The electronic control unit 22 is designed to determine the spark advance ensuring an optimal combustion for each engine point based on the flow rate of the exhaust gases of the low-pressure circuit $EGR_{LP}$; therefore, to this aim, it is necessary to provide a reliable and sturdy sensor 30, which delivers an estimate of the quantity of oxygen present in the gas mixture flowing through the intake pipe 6 that is as accurate as possible.

Therefore, the measurement of the percentage $O_2$ of oxygen contained in the volume of the gas mixture flowing through the intake pipe 6 can be improved by means of the following formula:

$$O_2 \ * \ k \ = \ O_{2\_COMP} \ [15]$$

$O_2$ percentage of oxygen contained in the volume of the gas mixture flowing through the intake pipe 6, which is determined by means of the sensor 30;

k compensation factor, function of the supercharging pressure $P_t$; and

$O_{2\_COMP}$ percentage of oxygen contained in the volume of the gas mixture flowing through the intake pipe 6.

The method to determine the compensation factor k is described in patent application BO2014A000687, which is entirely included herein as a reference.

The method described to determine the percentage $O_{2VIRT}$ of virtual oxygen contained in the volume of the exhaust gases flowing through the exhaust pipe 10 and recirculated through the low-pressure circuit $EGR_{LP}$ must be applied only in case the air/fuel equivalence ratio $\lambda$ of the exhaust gases flowing through the exhaust pipe 10 ranges from 0 to 1, namely with a flow of exhaust gases that is rich in fuel.

To this aim, according o figure 5, it is thus necessary for the following condition to be fulfilled:

$$V_{31} \ > \ TV_1 \ [16]$$

$V_{31}$ voltage coming from the sensor 31; and

$TV_1$ threshold value for the voltage coming from the sensor 31, for example amounting to 800mV (indicated in figure 4).

Or, alternatively, the following condition must be fulfilled:

$$\lambda_{31} < TV_1^* \quad [16^*]$$

$\lambda_{31}$ air/fuel equivalence ratio of the exhaust gases flowing through the exhaust pipe 10 determined by means of the sensor 31 downstream of the catalytic converter 11; and
$TV_1^*$ threshold value for the air/fuel equivalence ratio of the exhaust gases of the sensor 31.

According to a preferred variant, the further following condition must be fulfilled, as well:

$$\lambda < TV_2 \quad [16^{**}]$$

$\lambda$ air/fuel equivalence ratio of the exhaust gases flowing through the exhaust pipe 10 determined by means of the sensor 25 upstream of the catalytic converter 11; and
$TV_2$ threshold value for the air/fuel equivalence ratio of the exhaust gases flowing through the exhaust pipe 10.

In order to ensure a correct operation of the catalytic converter 11, the air/fuel equivalence ratio of the exhaust gases flowing through the exhaust pipe 10 is usually controlled so as to oscillate within a neighbourhood of 1 (stoichiometric air/fuel equivalence ratio). By so doing, the air/fuel equivalence ratio of the exhaust gases flowing through the exhaust pipe 10 oscillates within an interval of values that enables an optimal operation of the catalytic converter 11; for example, the air/fuel equivalence ratio of the exhaust gases flowing through the exhaust pipe 10 ranges from 0.98 to 1.02 and the threshold value $TV_2$ is smaller than the minimum value of said interval of values and, for example, is equal to 0.97.
According to a preferred variant, it is necessary not to activate any oscillating control over the sensor 25.
In case none of the aforesaid conditions [16, 16*, 16**] are fulfilled, the percentage $O_{2VIRT}$ of virtual oxygen contained in the volume of the exhaust gases flowing through the exhaust pipe 10 and recirculated through the low-pressure circuit $EGR_{LP}$ is equal to zero. On the other hand, in case both the aforesaid conditions [16, 16*, 16**] are fulfilled, the percentage $O_{2VIRT}$ of virtual oxygen contained in the volume of the exhaust gases flowing through the exhaust pipe 10 and recirculated through the low-pressure circuit $EGR_{LP}$ is calculated by means of the formula [14].
In order to disable the method for determining the percentage $O_{2VIRT}$ of virtual oxygen contained in the volume of the exhaust gases flowing through the exhaust pipe 10 and recirculated through the low-pressure circuit $EGR_{LP}$ must (as a matter of fact, this method must be applied only in case the air/fuel equivalence ratio $\lambda$ of the exhaust gases flowing through the exhaust pipe 10 ranges from 0 to 1, namely with a rich air/fuel equivalence ratio), the following condition must be fulfilled:

$$V_{31} < TV_3 \quad [16']$$

$V_{31}$ voltage coming from the sensor 31; and
$TV_3$ threshold value for the voltage coming from the sensor 31.

Or, alternatively, the following condition must be fulfilled:

$$\lambda_{31} < TV_1^* \quad [16'']$$

$\lambda_{31}$ air/fuel equivalence ratio of the exhaust gases flowing through the exhaust pipe 10 determined by means of the sensor 31 downstream of the catalytic converter 11; and
$TV_3^*$ threshold value for the air/fuel equivalence ratio of the exhaust gases of the sensor 31.

According to a preferred variant, the further following condition must be fulfilled, as well:

$$\lambda < TV_4 \quad [16''']$$

$\lambda$ air/fuel equivalence ratio of the exhaust gases flowing through the exhaust pipe 10 determined by means of the sensor 25 upstream of the catalytic converter 11; and
$TV_4$ threshold value for the air/fuel equivalence ratio of the exhaust gases flowing through the exhaust pipe 10.

Now the strategy comprises determining the real percentage $O_{2real}$ of oxygen contained in the volume of the gas mixture flowing through the intake pipe 6 through the sum of the percentage $O_{2VIRT}$ of virtual oxygen contained in the volume of the exhaust gases flowing through the exhaust pipe 10 and recirculated through the low-pressure circuit $EGR_{LP}$ and the percentage $O_{2\_COMP}$ of oxygen contained in the volume of the gas mixture flowing through the intake pipe 6 calculated through the formula [15].

More in detail, the real percentage $O_{2real}$ of oxygen contained in the volume of the gas mixture flowing through the intake pipe 6 is determined as follows:

$$O_{2real} = O_{2VIRT} + O_{2\_COMP} \quad [17]$$

$O_{2real}$ real percentage of oxygen contained in the volume of the gas mixture flowing through the intake pipe 6;
$O_{2VIRT}$ percentage of virtual oxygen contained in the volume of the exhaust gases flowing through the exhaust pipe 10 and recirculated through the low-pressure circuit $EGR_{LP}$; and
$O_{2\_COMP}$ percentage of oxygen contained in the volume of the gas mixture flowing through the intake pipe 6 calculated through the formula [15].

Finally, starting from the equation [11], you obtain that the quantity $R_{EGR}$ can be expressed as follows:

$$R_{EGR} = 1 - (O_{2real} / O_{2\_REF}) \quad [18]$$

$O_{2real}$ real percentage of oxygen contained in the volume of the gas mixture flowing through the intake pipe 6;
$O_{2\_REF}$ percentage of oxygen contained in the volume of fresh air coming from the outside that flows through the intake pipe 6.

According to a first variant, the real percentage $O_{2real}$ of oxygen contained in the volume of the gas mixture flowing through the intake pipe 6 is determined as follows:

$$O_{2real} = O_{2\_COMP} + O_{2VIRT} * f(\lambda_F, R_{EGRtemp}) \quad [19]$$

$O_{2real}$ real percentage of oxygen contained in the volume of the gas mixture flowing through the intake pipe 6;
$O_{2VIRT}$ percentage of virtual oxygen contained in the volume of the exhaust gases flowing through the exhaust pipe 10 and recirculated through the low-pressure circuit $EGR_{LP}$;
$O_{2\_COMP}$ percentage of oxygen contained in the volume of the gas mixture flowing through the intake pipe 6 calculated through the formula [15];
$R_{EGRtemp}$ temporary value of the quantity indicating the incidence of the low-pressure circuit $EGR_{LP}$ on the gas mixture flowing through the intake pipe 6; and
$\lambda_F$ filtered value of the air/fuel equivalence ratio of the exhaust gases flowing through the exhaust pipe 10.

According to a second variant, the real percentage $O_{2real}$ of oxygen contained in the volume of the gas mixture flowing through the intake pipe 6 is determined as follows:

$$O_{2real} = O_{2\_COMP} + O_{2VIRT} * f(\lambda_F, R_{EGRtemp}) + OS(\lambda_F, R_{EGRtemp}) \quad [20]$$

$O_{2real}$ real percentage of oxygen contained in the volume of the gas mixture flowing through the intake pipe 6;
$O_{2VIRT}$ percentage of virtual oxygen contained in the volume of the exhaust gases flowing through the exhaust pipe 10 and recirculated through the low-pressure circuit $EGR_{LP}$;
$O_{2\_COMP}$ percentage of oxygen contained in the volume of the gas mixture flowing through the intake pipe 6 calculated through the formula [15];
$R_{EGRtemp}$ temporary value of the quantity indicating the incidence of the low-pressure circuit $EGR_{LP}$ on the gas mixture flowing through the intake pipe 6; and
$\lambda_F$ filtered value of the air/fuel equivalence ratio of the exhaust gases flowing through the exhaust pipe 10.

According to a third variant, the real percentage $O_{2real}$ of oxygen contained in the volume of the gas mixture flowing through the intake pipe 6 is determined as follows:

$$O_{2real} = [O_{2\_COMP} + O_{2VIRT} * f(\lambda_F, R_{EGRtemp}) + OS(\lambda_F, R_{EGRtemp})] * \Delta(\lambda_F, R_{EGRtemp}) \quad [21]$$

$O_{2real}$ real percentage of oxygen contained in the volume of the gas mixture flowing through the intake pipe 6;
$O_{2VIRT}$ percentage of virtual oxygen contained in the volume of the exhaust gases flowing through the exhaust pipe 10 and recirculated through the low-pressure circuit $EGR_{LP}$;
$O_{2\_COMP}$ percentage of oxygen contained in the volume of the gas mixture flowing through the intake pipe 6 calculated through the formula [15];
$R_{EGRtemp}$ temporary value of the quantity indicating the incidence of the low-pressure circuit $EGR_{LP}$ on the gas mixture flowing through the intake pipe 6; and
$\lambda_F$ filtered value of the air/fuel equivalence ratio of the exhaust gases flowing through the exhaust pipe 10.

The treatment above can be generalized by making explicit that the real percentage $O_2$ of oxygen contained in the volume of the gas mixture flowing through the intake pipe 6 can be determined as follows:

$$O_2 = O_{2INT} * k * \Delta(\lambda_F, R_{EGRtemp}) * f_\Delta(\eta, n) + O_{2V} * f(\lambda_F, R_{EGRtemp}) * f_V(\eta, n) + OS(\lambda_F, R_{EGRtemp}) * f_{OS}(\eta, n) \quad [22]$$

$O_2$ percentage of oxygen contained in the volume of the gas mixture flowing through the intake pipe 6;
$O_{2V}$ percentage of virtual oxygen contained in the volume of the exhaust gases flowing through the exhaust pipe 10 and recirculated through the low-pressure circuit $EGR_{LP}$;
$O_{2INT}$ percentage of oxygen contained in the volume of the gas mixture flowing through the intake pipe 6 calculated through the formula [15];
$R_{EGRtemp}$ temporary value of the quantity indicating the incidence of the low-pressure circuit $EGR_{LP}$ on the gas mixture flowing through the intake pipe 6; and
$\lambda_F$ filtered value of the air/fuel equivalence ratio of the exhaust gases flowing through the exhaust pipe 10;
$\eta$ intake efficiency (equal to the ratio between the trapped air mass and the reference air mass); and
n speed of the internal combustion engine 1 (rpm).

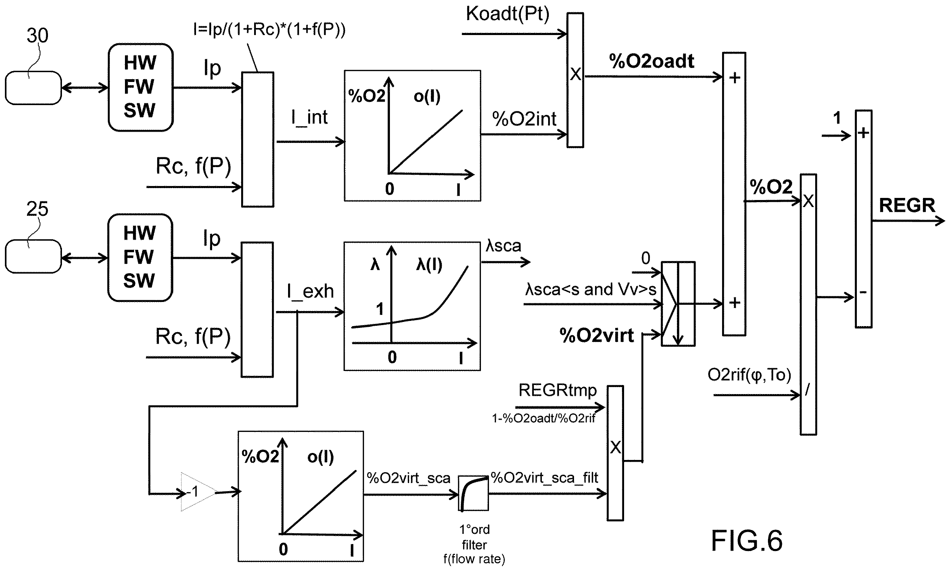

Below you can find a description of an alternative embodiment shown in figure 6, which is used to determine the percentage $O_{2VIRT}$ of virtual oxygen contained in the volume of the exhaust gases flowing through the exhaust pipe 10 and recirculated through the low-pressure circuit $EGR_{LP}$.

Through the model of the sensor 25 one can obtain the control current $I_P$ of the amperometric cell of the sensor 25. Subsequently, the intensity of the control current I of the sensor 25 is determined as a function of the control current $I_P$ of the amperometric cell of the sensor 25, of the compensation resistance $R_C$ of the sensor 25 and of the pressure P according to the formula [13].

Once the control current I of the sensor 25 has been determined, through the characteristic curves of the sensor 25 shown in figures 2 and 3 and provided by the manufacturer of the sensor 25 (which are stored in the electronic control unit 22) one can determine the percentage $O_2$ of oxygen contained in the volume of the exhaust gases flowing through the exhaust pipe 10 and the air/fuel equivalence ratio $\lambda$ of the exhaust gases flowing through the exhaust pipe 10 by means of the intensity of the control current I of the sensor 25.

The method comprises the step of determining the air/fuel equivalence ratio $\lambda$ of the exhaust gases flowing through the exhaust pipe 10 by means of the intensity of the control current I of the sensor 25 through the characteristic curve shown in figure 2.

The control current I of the sensor 25 assumes negative values in case the air/fuel equivalence ratio $\lambda$ of the exhaust gases flowing through the exhaust pipe 10 ranges from 0 to 1, namely with a rich air/fuel equivalence ratio. Hence, with a rich air/fuel equivalence ratio, you obtain a negative value of the control current I of the sensor 25. Subsequently, the strategy comprises using the absolute value of the control current I of the sensor 25 to determine a percentage $O_{2VIRT}$ of virtual oxygen contained in the volume of the exhaust gases flowing through the exhaust pipe 10. In particular, the method comprises determining a rough value of the percentage $O_{2V\_EX}$ of total virtual oxygen contained in the volume of the exhaust gases flowing through the exhaust pipe 10 by means of the absolute value of the control current I of the sensor 25 through the characteristic curve shown in figure 3.

The rough value of the percentage $O_{2V\_EX}$ of total virtual oxygen contained in the volume of the exhaust gases flowing through the exhaust pipe 10 is then filtered by means of a first order filter.

The constant of said first order filter is determined as a function of the total mass flow rate taken in, which is equal to the sum of the mass flow rate $M_{AIR}$ of fresh air coming from the outside that flows through the intake pipe 6 and of the mass flow rate of exhaust gases recirculated through the low-pressure exhaust gas recirculation circuit $EGR_{LP}$ (which thus allows you to take into account the mixing and the transportation dynamic in the exhaust pipe 10).

The filtered value of the percentage $O_{2V\_EX}$ of total virtual oxygen contained in the volume of the exhaust gases flowing through the exhaust pipe 10 is subsequently used to determine the percentage $O_{2VIRT}$ of virtual oxygen contained in the volume of the exhaust gases flowing through the exhaust pipe 10 and recirculated through the low-pressure circuit $EGR_{LP}$ by means of the following formula:

$$O_{2VIRT} = O_{2V\_EX} * R_{EGRtemp} \qquad [23]$$

$O_{2VIRT}$ percentage of virtual oxygen contained in the volume of the exhaust gases flowing through the exhaust pipe 10 and recirculated through the low-pressure circuit $EGR_{LP}$;

$O_{2V\_EX}$ filtered value of the percentage of virtual oxygen contained in the volume of the exhaust gases flowing through the exhaust pipe 10; and

$R_{EGRtemp}$ temporary value of the quantity indicating the incidence of the low-pressure circuit $EGR_{LP}$ on the gas mixture flowing through the intake pipe 6.

According to a first variant, the temporary value $R_{EGRtemp}$ of the quantity indicating the incidence of the low-pressure circuit $EGR_{LP}$ on the gas mixture flowing through the intake pipe 6 is calculated by means of the formula [11]. According to a further variant, the temporary value $R_{EGRtemp}$ of the quantity indicating the incidence of the low-pressure circuit EGRLP on the gas mixture flowing through the intake pipe 6 is equal to the quantity (or ratio) $R_{EGR}$ indicating the incidence of the low-pressure circuit $EGR_{LP}$ on the mass of the gas mixture flowing through the intake pipe 6 determined during the previous operating cycle of the strategy.

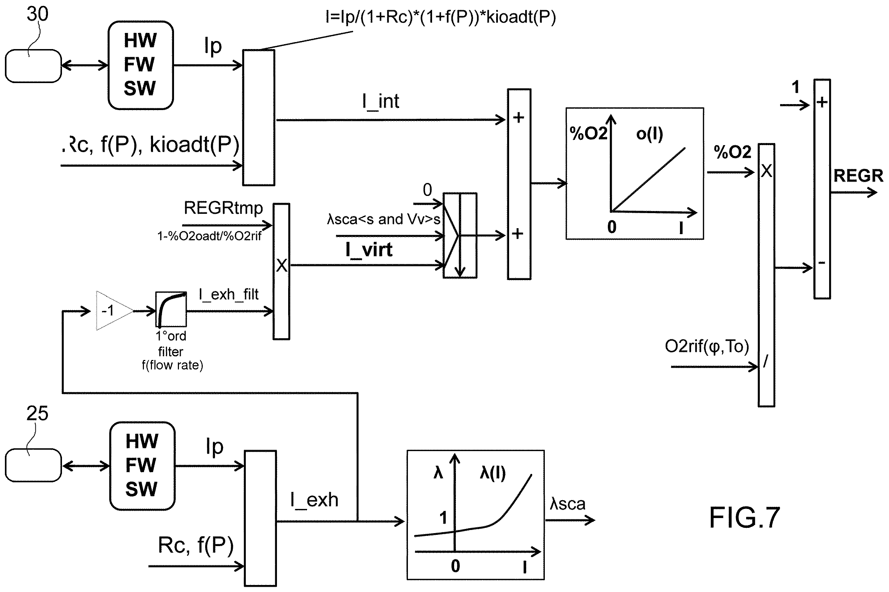

Below you can find the description of an alternative embodiment shown in figure 7 and used to determine the quantity $R_{EGR}$.

Through the model of the sensor 25 one can obtain the control current $I_P$ of the amperometric cell of the sensor 25. Subsequently, the a rough value of the control current I of the sensor 25 is determined as a function of the control current $I_P$ of the amperometric cell of the sensor 25, of the compensation resistance $R_C$ of the sensor 25 and of the pressure P according to the formula [13].

Once the rough value of the control current I of the sensor 25 has been determined, through the characteristic curves of the sensor 25 shown in figures 2 and 3 and provided by the manufacturer of the sensor 25 (which are stored in the electronic control unit 22) one can determine the percentage $O_2$ of oxygen contained in the volume of the exhaust gases flowing through the exhaust pipe 10 and the air/fuel equivalence ratio $\lambda$ of the exhaust gases flowing through the exhaust pipe 10 by means of the intensity of the control current I of the sensor 25.

In particular, the method comprises the step of determining the air/fuel equivalence ratio $\lambda$ of the exhaust gases flowing through the exhaust pipe 10 by means of the intensity of the control current I of the sensor 25 through the characteristic curve shown in figure 2.

The control current I of the sensor 25 assumes negative values in case the air/fuel equivalence ratio $\lambda$ of the exhaust gases flowing through the exhaust pipe 10 ranges from 0 to 1, namely with a rich air/fuel equivalence ratio. Hence, with a rich air/fuel equivalence ratio, you obtain a negative rough value of the control current I of the sensor 25. Subsequently, the absolute value of the control current I of the sensor 25 is filtered by means of a first order filter.

The constant of said first order filter is determined as a function of the total mass flow rate taken in, which is equal to the sum of the mass flow rate $M_{AIR}$ of fresh air coming from the outside that flows through the intake pipe 6 and of the mass flow rate of exhaust gases recirculated through the low-pressure exhaust gas recirculation circuit $EGR_{LP}$ (which thus allows you to take into account the mixing and the transportation dynamic in the exhaust pipe 10).

The filtered value of the control current I of the sensor 25 is then used to determine the virtual control current $I_{VIRT}$ by means of the following formula:

$$I_{VIRT} = I * R_{EGRtemp} \qquad [24]$$

$I_{VIRT}$ virtual control current of the sensor 25;

I filtered value of the control current of the sensor 25; and

$R_{EGRtemp}$ temporary value of the quantity indicating the incidence of the low-pressure circuit $EGR_{LP}$ on the gas mixture flowing through the intake pipe 6.

According to a first variant, the temporary value $R_{EGRtemp}$ of the quantity indicating the incidence of the low-pressure circuit EGRLP on the mass of the gas mixture flowing through the intake pipe 6 is calculated by means of the formula [11]. According to a further variant, the temporary value $R_{EGRtemp}$ of the quantity indicating the incidence of the low-pressure circuit EGRLP on the gas mixture flowing through the intake pipe 6 is equal to the quantity (or ratio) $R_{EGR}$ indicating the incidence of the low-pressure circuit $EGR_{LP}$ on the gas mixture flowing through the intake pipe 6 determined during the previous operating cycle of the strategy.

The method described above for determining the virtual control current $I_{VIRT}$ must be applied only in case the air/fuel equivalence ratio $\lambda$ of the exhaust gases flowing through the exhaust pipe 10 ranges from 0 to 1, namely namely with a flow of exhaust gases that is rich in fuel. To this aim, according o figure 7, it is thus necessary for the conditions set forth in [16, 16*, 16**] to be fulfilled.

In case the aforesaid conditions set forth in [16, 16*, 16**] are fulfilled, the virtual control current $I_{VIRT}$ is calculated by means of the formula [23].

Subsequently, according to a preferred variant, through the model of the sensor 30 one can obtain the control current $I_P$ of an amperometric cell of the sensor 30. Subsequently, the intensity of the control current I of the sensor 30 is determined as a function of the control current $I_P$ of the amperometric cell of the sensor 30, of a compensation resistance $R_C$ of the sensor 30 and of the pressure P.

In particular, the intensity of the control current I of the sensor 30 is determined by means of the formula [13], wherein the function f(P) is a function that is provided by the manufacturer of the sensor 30 and allows users to take into account the influence exerted by the pressure P upon the sensor 30 inside the intake pipe 6, and based on the compensation factor k (which, in turn, is a function of the supercharging pressure $P_t$).

The strategy now comprises the step of determining the actual control current I of the sensor 30 through the sum of the intensity of the control current I of the sensor 30 determined by means of the formula [13] and the virtual control current $I_{VIRT}$ calculated by means of the formula [23].

Once the actual control current I of the sensor 30 has been determined, through the characteristic curve of the sensor 30 provided by the manufacturer of the sensor 30 (which is stored in the electronic control unit 22) one can determine the percentage $O_2$ of oxygen contained in the gas mixture flowing through the intake pipe 6. The characteristic (which is substantially equal to the one considered for the sensor 25 and shown in figure 3) indicates the percentage $O_2$ of oxygen contained in gas mixture flowing through the intake pipe 6 as a function of the actual control current I of the sensor 30. Finally, starting from the equation [18] and after having determined the percentage $O_2$ of oxygen contained in gas mixture flowing through the intake pipe 6 as a function of the actual control current I of the sensor 30, one can obtain the quantity $R_{EGR}$.

The methods to determine the quantity $R_{EGR}$ indicating the incidence of the low-pressure exhaust gas recirculation circuit $EGR_{LP}$ described above have the advantage of ensuring good performances both in terms of precision and in terms of reliability in time.

In the treatment above, explicit reference was made to the case of a supercharged internal combustion engine 1, but the method described herein can be advantageously applied also to the case of an atmospheric internal combustion engine 1.

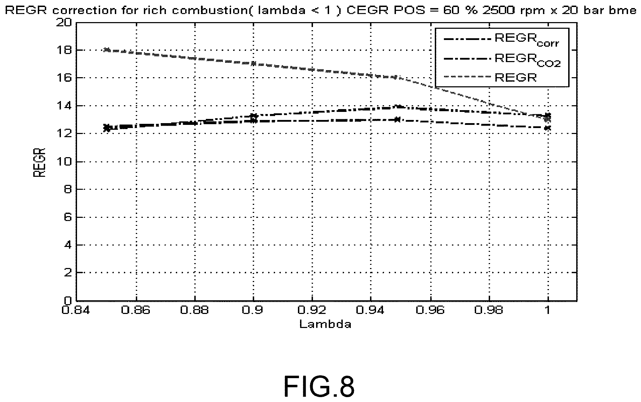

Considering the results of the experiments shown in figure 8, wherein $R_{EGR}$ indicates the development of the quantity $R_{EGR}$ calculated according to the state of the art (namely, without applying the strategy described above), $R_{EGRCO2}$ indicates the development of the quantity $R_{EGR}$ measured on the engine test stand and $R_{EGR}$ indicates the development of the quantity $R_{EGR}$ calculated according to the method described above, it is possible to show how, in case the air/fuel equivalence ratio is rich, the method described above allows users to obtain a fairly precise estimate of the quantity $R_{EGR}$.

Furthermore, the strategies described above are easy and cheap to be implemented in the electronic control unit 22, as they require a simple ability of calculation of the electronic control unit 22 and do not involve physical changes.

**Claims**

1. A method to control an internal combustion engine (1) provided with a low-pressure exhaust gas recirculation EGR circuit ($EGR_{LP}$) comprising an intake manifold (4) which receives a mixture of fresh air taken in from the outside and exhaust gases through an intake pipe (6); the internal combustion engine (1) comprises, furthermore, a first linear sensor (30), which is arranged along the intake pipe (6) and is designed to measure the quantity of oxygen available in the mixture of fresh air taken in and exhaust gases flowing through the intake pipe (6), and a second linear sensor (25), which is arranged along an exhaust pipe (10) and is designed to measure the quantity of oxygen and the air/fuel equivalence ratio of the flow of exhaust gases; the method comprises the steps of:

   determining the air/fuel equivalence ratio ($\lambda$) of the exhaust gases by means of the second sensor (25);
   determining a percentage ($O_{2COMP}$) of oxygen contained in the mixture of fresh air taken in and exhaust gases flowing through the intake pipe (6) by means of the first sensor (30) as a function of a temporary value ($R_{EGRtemp}$)

of a quantity ($R_{EGR}$) representing the incidence of the low-pressure exhaust gas recirculation EGR circuit ($EGR_{LP}$) on the mixture of fresh air taken in from the outside and exhaust gases flowing through the intake pipe (6) and of the air/fuel equivalence ratio ($\lambda$) of the exhaust gases determined by means of the second sensor (25); wherein the incidence of the low-pressure exhaust gas recirculation EGR circuit is equal to the ratio between the mass flow rate of the gases recirculated through the low-pressure exhaust gas recirculation EGR circuit and the total mass flow rate taken in, which, in turn, is given by the sum of the mass flow rate of the air taken in and the mass flow rate of the gases recirculated in the low-pressure exhaust gas recirculation EGR circuit; in case the exhaust air/fuel equivalence ratio ($\lambda$) is rich, the method comprises the further steps of:

- determining a percentage ($O_{2V}$) of virtual oxygen available in the flow of exhaust gases as a function of the exhaust air/fuel equivalence ratio ($\lambda$) determined by means of the second sensor (25); and

- calculating the percentage ($O_{2real}$) of total oxygen contained in the mixture of fresh air taken in and exhaust gases flowing through the intake pipe (6) through the sum of the percentage ($O_{2V}$) of virtual oxygen and the percentage ($O_{2COMP}$) of oxygen contained in the mixture of fresh air taken in and exhaust gases flowing through the intake pipe (6); and

- determining the quantity ($R_{EGR}$) representing the incidence of the low-pressure exhaust gas recirculation EGR circuit ($EGR_{LP}$) on the mixture of fresh air taken in from the outside and exhaust gases flowing through the intake pipe (6) as a function of the percentage ($O_{2real}$) of oxygen contained in the volume of the mixture of fresh air taken in and exhaust gases flowing through the intake pipe (6); and

determining the spark advance ensuring an optimal combustion for each engine point based on the flow rate of the exhaust gases of the low-pressure exhaust gas recirculation EGR circuit ($EGR_{LP}$).

2. The method according to claim 1 and comprising the further step of determining the percentage ($O_{2COMP}$) of oxygen contained in the mixture of fresh air taken in and exhaust gases flowing through the intake pipe (6) through the product of a compensation factor (k) and the percentage ($O_2$) of oxygen contained in the volume of the mixture of fresh air taken in and exhaust gases flowing through the intake pipe (6) detected by the first sensor (30); wherein the compensation factor (k) is variable as a function of the supercharging pressure ($P_t$) in the intake pipe (6).

3. The method according to any of claim 1 or 2 and comprising the further step of determining the percentage ($O_{2COMP}$) of oxygen contained in the mixture of fresh air taken in and exhaust gases flowing through the intake pipe (6) by means of the first sensor (30) as a function of the intake efficiency ($\eta$) and of the speed (n) of the internal combustion engine (1).

4. The method according to any of the previous claims and comprising the further step of determining the percentage ($O_{2V}$) of virtual oxygen available in the flow of exhaust gases as a function of the temporary value ($R_{EGRtemp}$) of the quantity ($R_{EGR}$).

5. The method according to any of the previous claims and comprising the further step of determining the percentage ($O_{2V}$) of virtual oxygen available in the flow of exhaust gases as a function of the intake efficiency ($\eta$) and of the speed (n) of the internal combustion engine (1).

6. The method according to any of the previous claims and comprising the further step of calculating the percentage ($O_{2real}$) of total oxygen contained in the mixture of fresh air taken in and exhaust gases flowing through the intake pipe (6) as a function of a compensation factor (OS), which is variable as a function of the air/fuel equivalence ratio ($\lambda$) of the exhaust gases determined by means of the second sensor (25) and of a temporary value ($R_{EGRtemp}$) of the quantity ($R_{EGR}$).

7. The method according to claim 6 and comprising the further step of determining the compensation factor (OS) as a function of the intake efficiency ($\eta$) and of the speed (n) of the internal combustion engine (1)

8. The method according to any of the previous claims, wherein the air/fuel equivalence ratio ($\lambda$) of the exhaust gases determined by means of the second sensor (25) is filtered by means of a first order filter.

9. The method according to claim 8, wherein the constant of the first order filter is determined as a function of a total mass flow rate taken in, which is equal to the sum of a mass flow rate ($M_{AIR}$) of fresh air coming from the outside flowing through the intake pipe (6) and of the mass flow rate of exhaust gases recirculated through the low-pressure exhaust gas recirculation EGR circuit ($EGR_{LP}$).

10. The method according to any of the previous claims and comprising the further step of determining the quantity ($REGR$) through the following formula:

$$R_{EGR} = 1 - (O_{2real}/O_{2\_REF})$$

$R_{EGR}$ quantity representing the incidence of the low-pressure exhaust gas recirculation EGR circuit ($EGR_{LP}$) on the mixture of fresh air taken in from the outside and exhaust gases flowing through the intake pipe (6);
$O_{2real}$ percentage of oxygen contained in the mixture of fresh air taken in and exhaust gases flowing through the intake pipe (6); and
$O_{2\_REF}$ percentage of oxygen contained in the fresh air taken in from the outside flowing in through the intake pipe (6).

11. The method according to any of the previous claims, wherein the second linear sensor (25) is arranged along the exhaust pipe (10) upstream of a catalytic converter (11) and the internal combustion engine (1) comprises a third ON/OFF sensor (31), which is arranged long the exhaust pipe (10) downstream of the catalytic converter (11); the method comprises the further step of checking whether the voltage ($V_{31}$) coming from the third sensor (31) exceeds a first threshold value ($TV_1$).

12. The method according to claim 11 and comprising the further step of checking whether the air/fuel equivalence ratio ($\lambda$) of the exhaust gases flowing through the exhaust pipe (10), which is determined by means of the second sensor (25), is below a second threshold value ($TV_2$).

13. The method according to any previous claim, wherein the temporary value ($R_{EGRtemp}$) of the quantity ($R_{EGR}$) is determined as a function of the percentage ($O_{2oadt}$) of oxygen contained in the mixture of fresh air taken in and exhaust gases flowing through the intake pipe (6), which is not corrected as a function of the air/fuel equivalence ratio ($\lambda$) of the exhaust gases flowing through the exhaust pipe (10); and of the percentage ($O_{2\_REF}$) of reference oxygen contained in the fresh air taken in from the outside flowing through the intake pipe (6).

**Patentansprüche**

1. Verfahren zur Regelung einer Brennkraftmaschine (1), die mit einem Niederdruck-Abgasrückführungs-(AGR)-Kreislauf ($EGR_{LP}$) versehen ist, umfassend einen Ansaugkrümmer (4), der durch ein Ansaugrohr (6) ein Gemisch aus von außen angesaugter Frischluft und Abgasen empfängt; wobei die Brennkraftmaschine (1) zudem einen ersten Linearsensor (30) umfasst, der entlang dem Ansaugrohr (6) angeordnet ist und dazu dient, die Sauerstoffmenge zu messen, die in dem durch das Ansaugrohr (6) strömenden Gemisch aus angesaugter Frischluft und Abgasen verfügbar ist, und einen zweiten Linearsensor (25), der entlang einem Abgasrohr (10) angeordnet ist und dazu dient, die Sauerstoffmenge und das Luft-Kraftstoff-Äquivalenzverhältnis des Abgasstromes zu messen; wobei das Verfahren folgende Schritte umfasst:

Bestimmen des Luft-Kraftstoff-Äquivalenzverhältnisses ($\lambda$) der Abgase mittels des zweiten Sensors (25);
Bestimmen eines Prozentsatzes ($O_{2COMP}$) des Sauerstoffs, der in dem durch das Ansaugrohr (6) strömenden Gemisch aus angesaugter Frischluft und Abgasen enthalten ist, mittels des ersten Sensors (30) in Abhängigkeit von einem temporären Wert ($R_{EGRtemp}$) einer Menge ($R_{EGR}$), welche die Auswirkungen des Niederdruck-Abgasrückführungs-(AGR)-Kreislaufs ($EGR_{LP}$) auf das durch das Ansaugrohr (6) strömende Gemisch aus angesaugter Frischluft und Abgasen sowie des mittels des zweiten Sensors (25) bestimmten Luft-Kraftstoff-Äquivalenzverhältnisses ($\lambda$) der Abgase darstellt; wobei die Auswirkungen des Niederdruck-Abgasrückführungs-(AGR)-Kreislaufs gleich dem Verhältnis zwischen dem Massendurchfluss der durch den Niederdruck-Abgasrückführungs-(AGR)-Kreislauf rückgeführten Gase und dem angesaugten Gesamtmassendurchfluss sind, der sich wiederum aus der Summe des Massendurchflusses der angesaugten Luft und des Massendurchflusses der durch den Niederdruck-Abgasrückführungs-(AGR)-Kreislauf rückgeführten Gase ergibt;
falls das Luft-Kraftstoff-Äquivalenzverhältnis ($\lambda$) fett ist, umfasst das Verfahren zudem folgende Schritte:

- Bestimmen eines Prozentsatzes ($O_{2V}$) des in dem Abgasstrom verfügbaren virtuellen Sauerstoffs in Abhängigkeit von dem mittels des zweiten Sensors (25) ermittelten Luft-Kraftstoff-Äquivalenzverhältnis ($\lambda$); und
- Berechnen des Prozentsatzes ($O_{2real}$) des in dem durch das Ansaugrohr (6) strömenden Gemisch aus angesaugter Frischluft und Abgasen enthaltenen Gesamtsauerstoffs mittels der Summe des Prozentsatzes ($O_{2V}$) des virtuellen Sauerstoffs und des Prozentsatzes ($O_{2COMP}$) des in dem durch das Ansaugrohr (6) strömenden Gemisch aus angesaugter Frischluft und Abgasen enthaltenen Sauerstoffs; und
- Bestimmen der Menge ($R_{EGR}$), welche die Auswirkungen des Niederdruck-Abgasrückführungs-(AGR)-Kreislaufs ($EGR_{LP}$) auf das durch das Ansaugrohr (6) strömende Gemisch aus von außen angesaugter Frischluft und Abgasen in Abhängigkeit von dem Prozentsatz ($O_{2real}$) des Sauerstoffs darstellt, der in dem Volumen des durch das Ansaugrohr (6) strömenden Gemisch aus angesaugter Frischluft und Abgasen enthalten ist; und

Bestimmen der Vorzündung anhand der Durchflussmenge der Abgase des Niederdruck-Abgasrückführungs-(AGR)-Kreislaufs ($EGR_{LP}$), welche eine optimale Verbrennung für jeden Motorpunkt sicherstellt.

2. Verfahren nach Anspruch 1, das zudem den Schritt umfasst, in dem der Prozentsatz ($O_{2COMP}$) des in dem durch das Ansaugrohr (6) strömenden Gemisch aus angesaugter Frischluft und Abgasen enthaltenen Sauerstoffs mittels des Produkts aus einem Ausgleichsfaktor (k) und dem Prozentsatz ($O_2$) des Sauerstoffs bestimmt wird, der in dem Volumen des durch das Ansaugrohr (6) strömenden Gemischs aus angesaugter Frischluft und Abgasen enthalten ist, welches durch den ersten Sensor (30) detektiert wird; wobei der Ausgleichsfaktor (k) in Abhängigkeit von dem Ladedruck ($P_t$) in dem Ansaugrohr (6) variabel ist.

3. Verfahren nach Anspruch 1 oder 2, das zudem den Schritt umfasst, in dem der Prozentsatz ($O_{2COMP}$) des in dem durch das Ansaugrohr (6) strömenden Gemisch aus angesaugter Frischluft und Abgasen enthaltenen Sauerstoffs mittels des ersten Sensors (30) in Abhängigkeit von der Ansaugleistung ($\eta$) und der Drehzahl (n) der Brennkraftmaschine (1) bestimmt wird.

4. Verfahren nach einem der vorstehenden Ansprüche, das zudem den Schritt umfasst, in dem der Prozentsatz ($O_{2V}$) des in dem Abgasstrom verfügbaren virtuellen Sauerstoffs in Abhängigkeit von dem temporären Wert ($R_{EGRtemp}$) der Menge ($R_{EGR}$) bestimmt wird.

5. Verfahren nach einem der vorstehenden Ansprüche, das zudem den Schritt umfasst, in dem der Prozentsatz ($O_{2V}$) des in dem Abgasstrom verfügbaren virtuellen Sauerstoffs in Abhängigkeit von der Ansaugleistung ($\eta$) und der Drehzahl (n) der Brennkraftmaschine (1) bestimmt wird.

6. Verfahren nach einem der vorstehenden Ansprüche, das zudem den Schritt umfasst, in dem der Prozentsatz ($O_{2real}$) des in dem durch das Ansaugrohr (6) strömenden Gemisch aus angesaugter Frischluft und Abgasen enthaltenen Gesamtsauerstoffs in Abhängigkeit von einem Ausgleichsfaktor (OS) bestimmt wird, der in Abhängigkeit von dem mittels des zweiten Sensors (25) ermittelten Luft-Kraftstoff-Äquivalenzverhältnisses ($\lambda$) der Abgase und einem temporären Wert ($R_{EGRtemp}$) der Menge ($R_{EGR}$) variabel ist.

7. Verfahren nach Anspruch 6, das zudem den Schritt umfasst, in dem der Ausgleichsfaktor (OS) in Abhängigkeit von der Ansaugleistung ($\eta$) und der Drehzahl (n) der Brennkraftmaschine (1) bestimmt wird.

8. Verfahren nach einem der vorstehenden Ansprüche, wobei das mittels des zweiten Sensors (25) ermittelte Luft-Kraftstoff-Äquivalenzverhältnisses ($\lambda$) der Abgase mithilfe eines Filters erster Ordnung gefiltert wird.

9. Verfahren nach Anspruch 8, wobei die Konstante des Filters erster Ordnung in Abhängigkeit von einem angesaugten Gesamtmassendurchfluss bestimmt wird, der gleich der Summe eines Massendurchflusses ($M_{AIR}$) der von außen zugeführten und durch das Ansaugrohr (6) strömenden Frischluft und des Massendurchflusses der durch den Niederdruck-Abgasrückführungs-(AGR)-Kreislauf ($EGR_{LP}$) rückgeführten Abgase ist.

10. Verfahren nach einem der vorstehenden Ansprüche, das zudem den Schritt umfasst, in dem die Menge ($R_{EGR}$) anhand folgender Formel bestimmt wird:

$$(R_{EGR}) = 1 - (O_{2real}/ O_{2\_REF})$$

wobei die Menge $R_{EGR}$ die Auswirkungen des Niederdruck-Abgasrückführungs-(AGR)-Kreislaufs ($EGR_{LP}$) auf das durch das Ansaugrohr (6) strömende Gemisch aus von außen angesaugter Frischluft und Abgasen darstellt; $O_{2real}$ der Prozentsatz des in dem durch das Ansaugrohr (6) strömenden Gemisch aus angesaugter Frischluft und Abgasen enthaltenen Sauerstoffs ist; und $O_{2\_REF}$ der Prozentsatz des in der durch das Ansaugrohr (6) von außen angesaugter Frischluft enthaltenen Sauerstoffs ist.

**11.** Verfahren nach einem der vorstehenden Ansprüche, wobei der zweite Linearsensor (25) entlang dem Abgasrohr (10) vor einem Katalysator (11) angeordnet ist und die Brennkraftmaschine (1) einen dritten ON/OFF-Sensor (31) umfasst, der entlang dem Abgasrohr (10) nach dem Katalysator (11) angeordnet ist; wobei das Verfahren zudem den Schritt umfasst, in dem geprüft wird, ob die von dem dritten Sensor (31) kommende Spannung ($V_{31}$) einen ersten Schwellenwert ($TV_1$) überschreitet.

**12.** Verfahren nach Anspruch 11, das zudem den Schritt umfasst, in dem geprüft wird, ob das mittels des zweiten Sensors (25) ermittelte Luft-Kraftstoff-Äquivalenzverhältnis ($\lambda$) der durch das Abgasrohr (10) strömenden Abgase unter einem zweiten Schwellenwert ($TV_2$) liegt.

**13.** Verfahren nach einem der vorstehenden Ansprüche, wobei der temporäre Wert ($R_{EGRtemp}$) der Menge ($R_{EGR}$) in Abhängigkeit von dem Prozentsatz ($O_{2oadt}$) des in dem durch das Ansaugrohr (6) strömenden Gemisch aus angesaugter Frischluft und Abgasen enthaltenen Sauerstoffs bestimmt wird, der nicht in Abhängigkeit von dem Luft-Kraftstoff-Äquivalenzverhältnis ($\lambda$) der durch das Abgasrohr (10) strömenden Abgase berichtigt wird; und von dem Prozentsatz ($O_{2\_REF}$) des Referenzsauerstoffs, der in der von außen angesaugten und durch das Ansaugrohr (6) strömenden Frischluft enthalten ist.

**Revendications**

**1.** Procédé pour commander un moteur à combustion interne (1) pourvu d'un circuit EGR de recirculation de gaz d'échappement basse-pression ($EGR_{LP}$) comprenant une tubulure d'admission (4) qui reçoit un mélange d'air frais prélevé de l'extérieur et de gaz d'échappement à travers un tuyau d'admission (6) ; le moteur à combustion interne (1) comprend, en outre, un premier capteur linéaire (30), qui est agencé le long du tuyau d'admission (6) et est conçu pour mesurer la quantité d'oxygène disponible dans le mélange d'air frais prélevé et de gaz d'échappement s'écoulant à travers le tuyau d'admission (6), et un deuxième capteur linéaire (25), qui est agencé le long d'un tuyau d'échappement (10) et est conçu pour mesurer la quantité d'oxygène et le rapport d'équivalence air/combustible de l'écoulement de gaz d'échappement ; le procédé comprend les étapes consistant à :

déterminer le rapport d'équivalence air/combustible ($\lambda$) des gaz d'échappement au moyen du deuxième capteur (25) ;
déterminer un pourcentage ($O_{2COMP}$) d'oxygène contenu dans le mélange d'air fais prélevé et de gaz d'échappement s'écoulant à travers le tuyau d'admission (6) au moyen du premier capteur (30) en fonction d'une vapeur temporaire ($R_{EGRtemp}$) d'une quantité ($R_{EGR}$) représentant l'incidence du circuit EGR de recirculation de gaz d'échappement basse-pression ($EGR_{LP}$) sur le mélange d'air frais prélevé de l'extérieur et de gaz d'échappement s'écoulant à travers le tuyau d'admission (6) et du rapport d'équivalence air/combustible ($\lambda$) des gaz d'échappement déterminé au moyen du deuxième capteur (25) ; dans lequel l'incidence du circuit EGR de recirculation de gaz d'échappement basse-pression est égale au rapport entre le débit massique des gaz recirculant à travers le circuit EGR de recirculation de gaz d'échappement basse-pression et le débit massique total prélevé, qui, quant à lui, est donné par la somme du débit massique de l'air prélevé et du débit massique des gaz recirculant dans le circuit EGR de recirculation de gaz d'échappement basse-pression ;
dans le cas où le rapport d'équivalence air/combustible d'échappement ($\lambda$) est riche, le procédé comprend les étapes supplémentaires consistant à :

- déterminer un pourcentage ($O_{2V}$) d'oxygène virtuel disponible dans l'écoulement de gaz d'échappement en fonction du rapport d'équivalence air/combustible d'échappement ($\lambda$) déterminé au moyen du deuxième capteur (25) ; et
- calculer le pourcentage ($O_{2real}$) d'oxygène total contenu dans le mélange d'air frais prélevé et de gaz d'échappement s'écoulant à travers le tuyau d'admission (6) par le biais de la somme du pourcentage ($O_{2V}$) d'oxygène virtuel et du pourcentage ($O_{2COMP}$) d'oxygène contenu dans le mélange d'air frais prélevé et de gaz d'échappement s'écoulant à travers le tuyau d'admission (6) ; et
- déterminer la quantité ($R_{EGR}$) représentant l'incidence du circuit EGR de recirculation de gaz d'échappement basse-pression (EGR$_{LP}$) sur le mélange d'air frais prélevé de l'extérieur et de gaz d'échappement s'écoulant à travers le tuyau d'admission (6) en fonction du pourcentage (O$_{2real}$) d'oxygène contenu dans le volume du mélange d'air frais prélevé et de gaz d'échappement s'écoulant à travers le tuyau d'admission (6) ; et

- déterminer la progression d'étincelle garantissant une combustion optimale pour chaque point de moteur sur la base du débit des gaz d'échappement du circuit EGR de recirculation de gaz d'échappement basse-pression (EGR$_{LP}$).

**2.** Procédé selon la revendication 1 et comprenant l'étape supplémentaire consistant à déterminer le pourcentage (O$_{2COMP}$) d'oxygène contenu dans le mélange d'air frais prélevé et de gaz d'échappement s'écoulant à travers le tuyau d'admission (6) par le biais du produit d'un facteur de compensation (k) et du pourcentage (O$_2$) d'oxygène contenu dans le volume du mélange d'air frais prélevé et de gaz d'échappement s'écoulant à travers le tuyau d'admission (6) détecté par le premier capteur (30) ; dans lequel le facteur de compensation (k) est variable en fonction de la pression de suralimentation (Pt) dans le tuyau d'admission (6).

**3.** Procédé selon l'une quelconque des revendications 1 ou 2 et comprenant l'étape supplémentaire consistant à déterminer le pourcentage (O$_{2COMP}$) d'oxygène contenu dans le mélange d'air frais prélevé et de gaz d'échappement s'écoulant à travers le tuyau d'admission (6) au moyen du premier capteur (30) en fonction du rendement d'admission ($\eta$) et de la vitesse (n) du moteur à combustion interne (1).

**4.** Procédé selon l'une quelconque des revendications précédentes et comprenant l'étape supplémentaire consistant à déterminer le pourcentage (O$_{2V}$) d'oxygène virtuel disponible dans l'écoulement de gaz d'échappement en fonction de la valeur temporaire (R$_{EGRtemp}$) d'une quantité (R$_{EGR}$).

**5.** Procédé selon l'une quelconque des revendications précédentes et comprenant l'étape supplémentaire consistant à déterminer le pourcentage (O$_{2V}$) d'oxygène virtuel disponible dans l'écoulement de gaz d'échappement en fonction du rendement d'admission ($\eta$) et de la vitesse (n) du moteur à combustion interne (1).

**6.** Procédé selon l'une quelconque des revendications précédentes et comprenant l'étape supplémentaire consistant à calculer le pourcentage (O$_{2real}$) d'oxygène total contenu dans le mélange d'air frais prélevé et de gaz d'échappement s'écoulant à travers le tuyau d'admission (6) en fonction d'un facteur de compensation (OS), qui est variable en fonction du rapport d'équivalence air/combustible ($\lambda$) des gaz d'échappement déterminé au moyen du deuxième capteur (25) et d'une valeur temporaire (R$_{EGRtemp}$) de la quantité (R$_{EGR}$).

**7.** Procédé selon la revendication 6 et comprenant l'étape supplémentaire consistant à déterminer le facteur de compensation (OS) en fonction du rendement d'admission ($\eta$) et de la vitesse (n) du moteur à combustion interne (1).

**8.** Procédé selon l'une quelconque des revendications précédentes, dans lequel le rapport d'équivalence air/combustible ($\lambda$) des gaz d'échappement déterminé au moyen du deuxième capteur (25) est filtré au moyen d'un filtre de premier ordre.

**9.** Procédé selon la revendication 8, dans lequel la constante du filtre de premier ordre est déterminée en fonction d'un débit massique total prélevé, qui est égal à la somme d'un débit massique (M$_{AIR}$) d'air frais provenant de l'extérieur s'écoulant à travers le tuyau d'admission (6) et du débit massique de gaz d'échappement recirculant à travers le circuit EGR de recirculation de gaz d'échappement basse-pression (EGR$_{LP}$).

**10.** Procédé selon l'une quelconque des revendications précédentes et comprenant l'étape supplémentaire consistant à déterminer la quantité (R$_{EGR}$) par le biais de la formule suivante :

$$R_{EGR} = 1 - (O_{2real}/O_{2\_REF})$$

R$_{EGR}$ quantité représentant l'incidence du circuit EGR de recirculation de gaz d'échappement basse-pression (EGR$_{LP}$) sur le mélange d'air frais prélevé de l'extérieur et de gaz d'échappement s'écoulant à travers le tuyau d'admission (6) ;

O$_{2real}$ pourcentage d'oxygène contenu dans le mélange d'air frais prélevé et de gaz d'échappement s'écoulant à travers le tuyau d'admission (6) ; et

O$_{2\_REF}$ pourcentage d'oxygène contenu dans l'air frais prélevé de l'extérieur s'écoulant à travers le tuyau d'admission (6).

**11.** Procédé selon l'une quelconque des revendications précédentes, dans lequel le deuxième capteur linéaire (25) est agencé le long du tuyau d'échappement (10) en amont d'un convertisseur catalytique (11) et le moteur à combustion interne (1) comprend un troisième capteur ON/OFF (31), qui est agencé le long du tuyau d'échappement (10) en aval du convertisseur catalytique (11) ; le procédé comprend l'étape supplémentaire consistant à vérifier si la tension ($V_{31}$) provenant du troisième capteur (31) dépasse une première valeur seuil ($TV_1$).

**12.** Procédé selon la revendication 11 et comprenant l'étape supplémentaire consistant à vérifier si le rapport d'équivalence air/combustible ($\lambda$) des gaz d'échappement s'écoulant à travers le tuyau d'échappement (10), qui est déterminé au moyen du second capteur (25), est sous une deuxième valeur seuil ($TV_2$).

**13.** Procédé selon une quelconque revendication précédente, dans lequel la valeur temporaire ($R_{EGRtemp}$) de la quantité ($R_{EGR}$) est déterminée en fonction du pourcentage ($O_{2oadt}$) d'oxygène contenu dans le mélange d'air frais prélevé et de gaz d'échappement s'écoulant à travers le tuyau d'admission (6), qui n'est pas corrigé en fonction du rapport d'équivalence air/combustible ($\lambda$) des gaz d'échappement s'écoulant à travers le tuyau d'échappement (10) ; et du pourcentage ($O_{2\_REF}$) d'oxygène de référence contenu dans l'air frais prélevé de l'extérieur s'écoulant à travers le tuyau d'admission (6).

FIG.1

FIG.2

FIG.3

FIG.4

FIG.5

FIG.6

FIG.7

REGR correction for rich combustion( lambda < 1 ) CEGR POS = 60 % 2500 rpm x 20 bar bme

FIG.8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009037543 A

- BO 000687 A